(19) Europäisches Patentamt / European Patent Office / Office européen des brevets

(11) **EP 2 489 856 B1**

(12) **EUROPEAN PATENT SPECIFICATION**

(45) Date of publication and mention
of the grant of the patent:
**04.06.2014   Bulletin 2014/23**

(51) Int Cl.:
**F02C 7/045** (2006.01)   **F02K 1/82** (2006.01)
**G10K 11/172** (2006.01)

(21) Application number: **12168433.6**

(22) Date of filing: **17.05.2007**

(54) **Micro-perforated acoustic liner**

Mikroperforierte schalldämpfende Auskleidung

Revêtement insonorisant micro-perforé

(84) Designated Contracting States:
**DE GB**

(30) Priority: **26.05.2006   US 441912**

(43) Date of publication of application:
**22.08.2012   Bulletin 2012/34**

(62) Document number(s) of the earlier application(s) in
accordance with Art. 76 EPC:
**07252026.5 / 1 860 301**

(73) Proprietor: **United Technologies Corporation
Hartford, CT 06101 (US)**

(72) Inventors:
• **Morin, Bruce L.
Springfield, MA Massachusetts 01104 (US)**
• **Ksiazkiewicz, Jr., Rudolph A.
Plainville, CT Connecticut 06062 (US)**

• **Cicon, Dennis
Coventry, CT Connecticut 06238 (US)**

(74) Representative: **Leckey, David Herbert
Dehns
St Bride's House
10 Salisbury Square
London
EC4Y 8JD (GB)**

(56) References cited:
**GB-A- 2 404 966        US-A- 5 721 402
US-A1- 2003 141 144**

• **ROBERTS D W: "Equivalent sand-grain
roughness of perforated plate acoustics linings",
AIAA PAPER, NY, 1 January 1977 (1977-01-01),
pages 77-104, XP009119416, ISSN: 0146-3705**

**Description**

**BACKGROUND OF THE INVENTION**

This invention generally relates to a liner assembly for reducing emitted noise. More particularly, this invention relates to a method of fabricating an acoustic liner with improved acoustic and operational performance.

An aircraft engine generates noise during operation that requires attenuation and control. The noise generated by operation of the aircraft engine is of many different frequencies, some of which contribute disproportionately more noise to the overall emitted noise. Accordingly, a housing surrounding and protecting the aircraft engine is provided with a noise attenuation liner. Ideally, the noise attenuation liner will reduce or eliminate noise of all frequencies generated within the engine housing. However, practical limitations reduce the efficient attenuation of noise at some frequencies in favor of other noise frequencies.

For these reasons, noise attenuation liners are tuned or tailored to attenuate the most undesirable frequencies with the greatest efficiency. Unfortunately, the compromises required to efficiently attenuate the most undesirable frequencies limits the effective attenuation of other noise frequencies.

Conventional acoustic liners include a cellular structure sandwiched between a back sheet and a face sheet including a plurality of openings. The openings create a drag on flow through the engine during operation. The drag inhibits overall engine performance. A known improvement is the use of a woven mesh liner to cover the cellular structure. The woven mesh provides effective noise attenuation over a broad range of noise frequencies. Further, the woven mesh provides a desirably low skin friction coefficient that reduces drag. Disadvantageously, a woven-mesh liner does not provide the desired durability and therefore requires increased maintenance at a prohibitive cost.

Accordingly, it is desirable to design and develop a noise attenuation liner and method of fabricating a noise attenuation liner that provides the durability desired, with reduced drag and increased frequency attenuation ranges.

A prior art liner assembly, having the features of the preamble of claim 1, is disclosed in US-5721402. Another prior art assembly is disclosed in Roberts D W "Equivalent sand-grain roughness of perforated plate acoustic linings", AIAA Paper, NY, 1977-01-01, p.77-104, XP009119416, ISSN: 0146-3705.

**SUMMARY OF THE INVENTION**

According to the present invention, there is provided an aircraft engine noise attenuation liner assembly as claimed in claim 1.

An example liner assembly includes a backing plate that supports a cellular structure covered by a perforated face sheet including a plurality of openings. Each of the plurality of openings is of a size determined to provide desired acoustic and air flow performance.

The example noise attenuation structure includes a plurality of cells covered by the perforated face sheet. The perforated face sheet includes a plurality of openings to communicate acoustic energy to the underlying cellular structure. The configuration of the perforated face sheet is fabricated to minimize drag while maximizing acoustic attenuation performance. Openings within the perforated face sheet are of a size that mitigates aerodynamic drag inflicted on airflow.

The example liner assembly is fabricated according to a relationship utilizing selected performance characteristics to determine physical dimensions of the perforated face sheet. The method of fabricating the example liner assembly includes the step of selecting a desired non-linearity factor. The non-linearity factor is utilized to quantify deviation from a desired sound level in view of changes to airflow and pressure. Resistance to air flow is also a performance characteristic that is selected to determine the configuration of the liner assembly and is a performance measure utilized to measure desired liner assembly performance.

A noise attenuation liner disclosed herein comprises a cellular structure for dissipating acoustic energy and a first perforated face sheet comprising a plurality of openings each having a diameter no larger than 0.005 inches (0.127 mm). A surface of the first perforated face sheet includes a surface finish no greater than an equivalent sand-grain roughness of 0.0003 inches (0.00762 mm), more particularly no greater than 0.0002 inches (0.00508 mm).

Accordingly, an example acoustic liner assembly fabricated with a face sheet designed and built according to the method of this invention provides improved acoustic performance, reduced drag affects and improved linearity across a wide range of engine operating conditions in a durable acoustic liner assembly.

These and other features of the present invention can be best understood from the following specification and drawings, the following of which is a brief description.

**BRIEF DESCRIPTION OF THE DRAWINGS**

Figure 1 is a schematic view of an example aircraft engine housing.
Figure 2 is a cut away view of an example attenuation liner assembly.
Figure 3 is a cross-sectional view of an example attenuation liner assembly.
Figure 4 is a graph of example design spaces created by the example method to provide desired acoustic liner performance.

## DETAILED DESCRIPTION OF THE PREFERRED EMBODIMENT

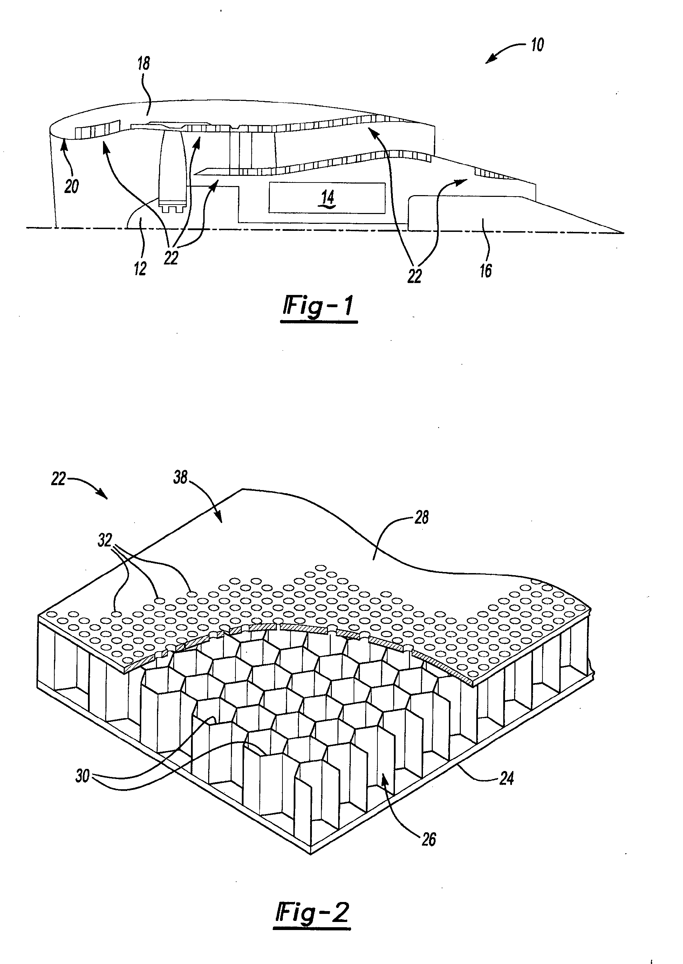

Referring to Figure 1, an example aircraft engine assembly 10 includes a compressor module 12 compressing incoming air and routing some of that air to a combustor module 14, In the combustor module 14 the compressed air is mixed with fuel and ignited to produce a high velocity air flow directed through a turbine module 16. Operation of the aircraft engine assembly 10 produces noises of various frequencies at such levels that some attenuation is required. The engine assembly 10 is at least partially enclosed within a housing 18. The housing 18 protects the engine assembly 10 and defines an inner surface 20 for directing airflow into and around the compressor module 12. The inner surface 20 of the housing 18 includes noise attenuation liners 22 disposed in desired locations for reducing the harshest of the noise generated by the engine assembly 10. The example liner assembly 22 is described as utilized with an aircraft engine assembly.

Referring to Figure 2, the liner assembly 22 includes a backing plate 24 that supports a cellular structure 26. The example cellular structure includes a plurality of cells 30 that partially dissipates acoustic energy entering the cellular structure 26, thereby reducing and preventing the propagation of noise through the housing 18. The cellular structure 26 is covered by a perforated face sheet 28. The face sheet 28 includes a plurality of openings 32 to communicate acoustic energy to the underlying cellular structure 26. The example face sheet 28 can be constructed of metal, plastic, composites and/or other known materials. A surface 38 of the face sheet 28 comprises a part of the inner surface 20 of the housing 18. The inner surface 20 of the housing 18 is constructed to minimize drag.

The configuration of the face sheet 28 is fabricated to minimize drag while maximizing acoustic attenuation performance. The example openings 32 are generally round holes including a diameter. The number and diameter of openings 32 are determined to provide a desired percent open area. The percent open area is that area of all the plurality of openings 32 relative to the entire area of the surface 38. The percent open area is determined to provide a desired performance of the noise attenuation liner assembly 22.

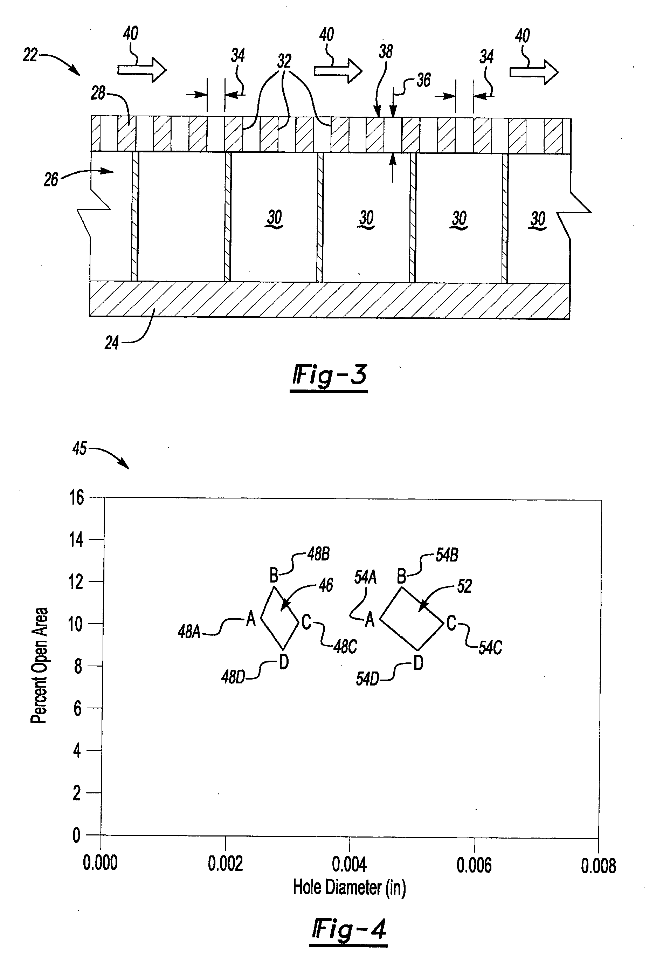

Referring to Figure 3, a cross-section of the liner assembly 22 illustrates the openings 32 that communicate acoustic energy into the various cells 30 that comprise the cellular structure 26. A diameter 34 of the openings 32, along with the number of openings is determined to provide a desired percent open area. The percent open area along with the number and diameter of the plurality of openings are utilized to tailor the noise attenuation and performance of the liner assembly 22. Smaller diameter openings 32 reduce drag through the housing assembly 18. Larger openings produce greater drag and turbulence that disrupts airflow and therefore impacts overall engine performance.

The example liner assembly 22 is fabricated according to a relationship that includes selected desired performance characteristics in view of physical dimensions of the face sheet 28. The method of fabricating the example liner assembly 22 includes the step of selecting a desired non-linearity factor. The non-linearity factor is selected to provide the desired acoustic performance over a range of air flows and air pressures that are indicative of operating conditions. It is desired to reduce the non-linearity factor to a value close to "1" as a value of "1" is indicative of a completely linearly performing liner.

The non-linearity factor provides a measure of any deviation from the linear idealized linear. In some instances some non-linearity is desired at higher pressures and air flows, which is reflected in increased non-linearity values. As appreciated, the specific range of non-linearity factors utilized will reflect the desired liner performance for a specific application. The illustrated example liner assembly 22 is tailored to provide a desired non-linearity factor between 1.4 and 1.6.

Resistance to air flow is also a performance characteristic that is utilized in determining the configuration of the liner assembly and is a performance measure that accounts for many physical factors of the liner assembly. Resistance is selected at a desired flow speed, in this example 105 cm/sec, through the face sheet 28. The resistance is a value that is indicative of a resistance to air flow as measured by a drop in pressure through the face sheet 28. The example liner assembly 22 is constructed to provide a resistance within a range between 60 and 80 cgs Rayls. As appreciated, other resistance ranges as are required for providing other desired resistances are also within the contemplation of this invention.

The surface finish of the face sheet surface 38 also affects performance and is determined as a function of hole diameter size. The face sheet surface 38 can be represented in an equivalent sand-grain roughness. The equivalent sand-grain roughness is determined as a factor related to the diameter of the openings 32 according to the relationship;

$$\mathbf{K_s = d \times 0.45\sigma} \qquad \text{(Equation 1)}$$

Where $K_s$ is the equivalent sand-grain roughness in inches;
d is the diameter of the opening in inches; and
$\sigma$ is the open area ratio.

The example liner assembly 22 includes a surface finish of approximately 0.000198 inches (0.00503 mm) for holes having a nominal diameter of 0.032 inches (0.8128 mm). As appreciated, the measured surface finish is reflective of the size and amount of openings provided in the face sheet 28.

The method utilizes the desired tailored performance values of the face sheet 28 to determine the specific range of hole diameters 34. The method begins by specifying the desired performance of the liner assembly 22. Performance for the example liner assembly 22 is specified by selecting a range of non-linearity factors and resistance values that are indicative of desired liner performance. Once the desired acoustic performance values are selected, the diameter and thickness of the face sheet 28 are determined according to a relationship accounting for each criterion.

In the illustrative example, the non-linearity factor is a value between 1.4 and 1.6, and the resistance is an $R_{105}$ resistance between 60 and 80 cgs Rayls. As appreciated, the non-linearity factor values and the resistance values are indicative of a selected liner performance, and the example liner assembly can be fabricated according to other desired performance requirements.

The non-linearity factor along with the resistance value is utilized to determine a required percent open area (POA) that will provide performance within the desired parameters. A relationship including the values selected that are indicative of the desired liner performance attributes are utilized to determine the physical dimensions for the liner assembly. The relationship utilizes know relationships to provide the desired dimensions. This is determined according to the empirical relationship:

$$POA = 4.202 \left( \frac{95 + 85NLF}{R_{105}\left(NLF - 1\right)} \right)^{0.474} \qquad \text{(Equation 2)}$$

Where: POA is percent open area;
NLF is the selected non-linearity factor; and
$R_{105}$ is the selected resistance value in cgs Rayls.

Once the percent open area is determined, the diameter 34 of each of the plurality of openings 32 is determined. The diameter 34 is determined according to a relationship that factors in the selected non-linearity factor and the selected resistance values. The relationship is utilized to determine the diameter 34 of the opening 32 given a thickness 36 of the face sheet that is required to provide the desired performance. The example liner assembly 22 is fabricated to provide a performance having a NLF of between 1.4 and 1.6, and a $R_{105}$ resistance value within a range between 60 and 80 cgs Rayls. The diameter of each of the openings 32 is determined according to the empirical relationship:

$$d = 9.42 \left( \frac{19 + 17NLF}{R_{105}} \right)^{0.263} \left(NLF - 1\right)^{0.237} \sqrt{\frac{\mu t}{10 - NLF}} \qquad \text{(Equation 3)}$$

Where d is the diameter of the opening in inches;
NLF is the non-linearity factor;
$R_{105}$ is the resistance value in cgs Rayls;
t = thickness of the face sheet in inches; and
$\mu$ = the absolute viscosity in poise.

The diameter determined according to this relationship combined with the previously determined percent open area specifies a perforated face sheet 28 that provides the selected non-linearity and resistance values that are indicative of desired liner performance. The diameter 34 is determined utilizing the same parameters as is utilized to determine the percent open area. Accordingly, an example relationship can be utilized to determine the diameter 34 of the opening that is required in view of the thickness of the face sheet material.

The percent open area and diameter 34 are determined for each combination of range limits for the selected non-linearity values and resistance values. In the described example, non-linearity is selected to be between 1.4 and 1.6 and the $R_{105}$ resistance is selected to be between 60 and 80 cgs Rayls. Four combinations are determined utilizing these points to define a range of possible percent open area and hole diameter combinations that will fulfill the selected design requirements. For a given range of selected non-linearity values and selected resistance values a general equation can be utilized that relates the terms of the above relationships to determine a diameter in inches for a given thickness. The terms from equations 2 and 3 are utilized to determine the diameter as a function of thickness according to the relationship:

$$d = ((C1) \times t^2) + ((C2) \times t) + C3 \qquad \text{(Equation 4)}$$

Where d is the diameter of the opening;
t is the thickness of the face sheet;
C1 is a constant determined based on the desired NLF and resistance factors;
C2 is a constant determined based on the desired NLF and resistance factors; and
C3 is another constant determined based on the desired NLF and resistance factors.

In the example liner assembly 22, for a NLF of 1.4 and a resistance of 80 cgs Rayls the percent open area is 10.35 %, the constants are C1= -0.317, C2 = 0.0727 and C3 = 0.00128. The constant values are determined utilizing the same information utilized to obtain the percent open area. The constants utilized to relate diameter to thickness for a selected combination of NLF and $R_{105}$ resistance. The diameter of the openings 32 are paired with the corresponding value for the percent open area of 10.35% in the face sheet. The example diameter is determined for an example face sheet with a thickness of 0.020 inches (0.508 mm) according to the relationship;

$$d = (0.317 \times (0.020)^2) + (0.0727 \times 0.020) + 0.00128.$$

A nominal diameter of 0.0026 inches (0.066 mm) for the openings. The small size of the openings provides the desired surface finish while also providing the desired acoustic attenuation performance. As appreciated for other combinations of NLF and $R_{105}$ resistance the constant values of C1, C2 and C3 will change. For example, the example liner assembly 22 can be fabricated with an open area ranging from 8.86% up to 11.86%. Each combination of NLF and $R_{105}$ resistance will yield a corresponding percent open area and diameter combination that will provide the selected performance.

For example, an NLF of 1.6 and a $R_{105}$ resistance of 80 cgs Rayls require an open area of 8.86% in combination with the determined diameter as related to a thickness of the face sheet. Further determination of equations 2 and 3 with the selected NLF and $R_{105}$ resistance values provide for the determination of the constants C1 = -0.360, C2 =0.0826 and C3 = .00146. The specified constants are utilized to determine a diameter of 0.0029 inches (0.0737 mm) for a given face sheet thickness, in this example a thickness of 0.02 inches (0.508 mm).

For a selected NLF of 1,4, a $R_{105}$ resistance of 60 cgs Rayls the percent open area is 11.86%, and the determined constants are C1 = -0.341, C2 =0.0784 and C3 = .00138. A diameter of 0.0028 inches (0.071 mm) is determined utilizing these constants for a face sheet thickness of 0.02 inches (0.508 mm).

For a selected NLF of 1.6 and a $R_{105}$ resistance of 80 cgs Rayls, the percent open area is determined to be 10.14%, and the constants C1 = -0.388, C2 =0.0891 and C3 = .00157. The determined diameter of 0.0031 inches (0.0787 mm) in a face sheet with a thickness of 0.02 inches (0.508 mm) corresponding to the percent open area of 10.14%. The different constant values are determined utilizing the combinations of extreme values for the selected ranges of NLF and $R_{105}$ resistance values that are utilized to determine the corresponding percent open area and diameters related to the thickness of the face sheet in inches.

Referring to Figure 4, a graph 45 illustrates the example desired open areas utilized in conjunction with the required diameter 34 of the openings 32 for the specific thickness to determine a design space 46, within which the metal face sheet 28 will provide the desired performance. The design space 46 represents the range and combination of hole diameters and percent open areas for a face sheet 28 including a thickness of 0.020 inches (0.508 mm) that provides the desired performance relating to the selected NLF and $R_{105}$ resistance values.

In the example graph 45 the point 48A is determined by combining the percent open area and diameter that is determined utilizing a non-linearity factor of 1.4 and a resistance value of 80 cgs Rayls. The point 48A represents an open area of 10.35%, and a hole diameter 34 of 0.0026 inches (0.066 mm). Another point 48B is determined utilizing the non-linearity value of 1.4, and a resistance value of 60 cgs Rayls. The point 48B represents an open area 11.86% and a diameter 34 of 0.0028 inches (0.0711 mm). Point 48C is determined utilizing the non-linearity value of 1,6 and a resistance value of 80 cgs Rayls, and represents an open area of 10.14% and a diameter 34 of 0.0032 inches (0.0813 mm). Point 48D is determined utilizing the non-linearity value of 1.6 and the resistance value of 60 cgs Rayls and represents a percent open area of 8.86% and a hole diameter 0.003 inches (0.0762 mm). The resulting design space 46 applies to a metal face sheet having thickness of 0.020 inches (0.508 mm) in order to provide the desired performance. As appreciated, for different selected NLF and $R_{105}$ resistance values, different design spaces will by defined that will in turn provide the selected liner performance.

Another design space 52 illustrates the combination of percent open area and hole diameter required for a face sheet having a thickness of 0.060 inches (1.524 mm) in order to provide the desired liner performance for the example NLF and $R_{105}$ resistance values. The percent open areas are substantially the same as for the thinner face sheet material utilized for the example design space 46 with an increased range and size of hole diameters. The increased hole diameters and percent open area combinations indicated by points 54A, 54B, 54C and 54D provide the desired liner performance in the thicker face sheet. The larger diameter openings operate to provide substantially equal performance as compared to the face sheet with a thickness of 0.02 inches (0.508 mm). The example point 54A relates to a hole diameter 34 of 0.0045 inches (0.1143 mm), point 54B relates to a hole diameter 34 of 0.0049 inches (0.1245 mm), point 54C relates to a hole diameter 34 of 0.0055 inches (0.1397 mm) and point 54D relates to a hole diameter 34 of 0.005 inches (0.127 mm).

Although the hole diameter required to provide the selected liner performance can vary for differing thickness of face sheet 38, a specific range of hole sizes as related to face sheet thickness applies to the example liner assembly. The hole diameter is no more than 1/6th the thickness of the face sheet to provide the desired performance. Although hole diameters are greater in the thicker face sheet provided for in the design space 52, any hole diameter is no more than 1/6th the thickness. The hole diameter 34 may be less, such as for example 1/9th the thickness of the face sheet or even less, but is not greater than 1/6th the face sheet thickness.

The method of fabricating a liner assembly according to this invention begins by first selecting a non-linearity factor and $R_{105}$ resistance. The NLF is selected to provide the desired acoustic performance over a range of engine operating conditions. Once the NLF is determined, a resistance value is determined. The resistance is tailored to the application operating conditions to provide for the attenuation of noise within a desired noise frequency band. The disclosed example includes a range of resistance of between 60 and 80 cgs Rayls for an air flow speed of 105 cm/sec. The example NLF range is between 1.4 and 1.6 to provide the desired liner performance.

Once the performance parameters have been selected, the percent open area is determined utilizing the example relationship represented by equation 2. Once the percent open area is determined the diameter for the opening is determined as it relates to the thickness of the desired face sheet material. The diameter is determined for each combination provided by the extreme limits of range for NLF and $R_{105}$ resistance. The pairs of related diameters and percent open areas define the boundaries of the design space. Any pair of percent open area and hole diameter within the defined design space will provide the selected NLF and $R_{105}$ resistance for the liner assembly 22.

Accordingly, the example method of fabricating a liner assembly provides a liner assembly having a selected NLF and resistance value that provides the desired noise attenuation with reduced resistance, while providing a perforated face sheet that increases durability. Further, the example ratio of each of the plurality of hole diameters being less then approximately 1/6th the thickness of the face sheet provides a relatively smooth surface with substantially the same drag as is created for a non-perforated face sheet. Acoustic liner assemblies fabricated with a face sheet designed and built according to the method of this invention provide improved acoustic performance, reduced drag affects and improved linearity across a wide range of engine operating conditions in a durable acoustic liner assembly.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. An aircraft engine noise attenuation liner assembly (22) comprising:

    a cellular structure (26) for dissipating acoustic energy; and
    a first perforated face sheet (28) comprising a plurality of openings (32) each having an opening size no larger than 0.005 inches (0.127 mm),

**characterised in that**:

a surface of the first perforated face sheet (28) includes a surface finish no greater than an equivalent sand-grain roughness of 0.0003 inches (0.00762 mm), wherein the sand-grain roughness is determined according to the relationship:

$K_s$ = d x 0.45$\sigma$ where $K_s$ is the equivalent sand-grain roughness in inches, d is the diameter of the opening in inches and $\sigma$ is the open area ratio; and
the face sheet thickness (36) is at least 0.020 inches (0.508 mm).

2. The assembly as recited in claim 1, wherein an open area of the perforated face sheet (28) comprises an area determined to provide a selected desired non-linearity factor and resistance factor.

3. The assembly as recited in claim 1 or 2, wherein each of the plurality of openings (32) are spaced apart an equal distance.

4. The assembly as recited in any preceding claim, wherein the plurality of openings (32) are disposed substantially transverse to the surface of the face sheet (28).

5. The assembly as recited in any preceding claim, wherein an open area of the perforated face sheet (28) is greater than 8.5%.

6. The assembly as recited in any preceding claim, wherein the size of the opening (32) is no greater than 1/6$^{th}$ the thickness (36) of the perforated face sheet (28).

7. The assembly as recited in any preceding claim, wherein the opening (32) is a round hole and the opening size is a diameter.

8. The assembly as recited in claim 8, wherein each of the plurality of openings (32) include a diameter of approximately 0.004 inches (0.1016 mm).

9. The assembly as recited in any preceding claim, wherein the surface of the perforated face sheet (28) includes an equivalent sand grain roughness no greater than .0002 inches (0.00508 mm).

10. The assembly as recited in any preceding claim, wherein the thickness (36) of the perforated sheet (28) is no greater than 0.10 inches (2.54 mm).

**Patentansprüche**

1. Flugzeugtriebwerk-Schalldämpfungsauskleidungsanordnung (22), aufweisend:

eine zellulare Struktur (26) zum Abführen von Schallenergie; und
einen ersten perforierten Front-Flächenkörper (28) mit einer Mehrzahl von Öffnungen (32), die jeweils eine Öffnungsgröße von nicht mehr als 0,005 Inch (0, 127 mm) aufweisen,
**dadurch gekennzeichnet, dass**
eine Oberfläche des ersten perforierten Front-Flächenkörpers (28) eine Oberflächengüte von nicht mehr als einer äquivalenten Sandkorn-Rauheit von 0,0003 Inch (0,00762 mm) aufweist,
wobei die Sandkorn-Rauheit entsprechend der Beziehung festgelegt ist:

$K_s$ = d x 0,45$\sigma$ , wobei $K_s$ die äquivalente Sandkorn-Rauheit in Inch ist, d der Durchmesser der Öffnung in Inch ist und $\sigma$ das Verhältnis der offenen Fläche ist; und
dass die Front-Flächenkörperdicke (36) mindestens 0,020 Inch (0,508 mm) beträgt.

2. Anordnung nach Anspruch 1,
wobei die offene Fläche des perforierten Front-Flächenkörpers (28) eine Fläche umfasst, die zum Schaffen eines ausgewählten gewünschten Nichtlinearitätsfaktors und Widerstandsfaktors festgelegt ist

**3.** Anordnung nach Anspruch 1 oder 2,
wobei die Mehrzahl von Öffnungen (32) jeweils mit gleichem Abstand voneinander beabstandet sind.

**4.** Anordnung nach einem der vorhergehenden Ansprüche,
wobei die Mehrzahl von Öffnungen (32) im Wesentlichen quer zu der Oberfläche des Front-Flächenkörpers (28) angeordnet sind.

**5.** Anordnung nach einem der vorhergehenden Ansprüche,
wobei eine offene Fläche des perforierten Front-Flächenkörpers (28) größer als 8, 5 % ist.

**6.** Anordnung nach einem der vorhergehenden Ansprüche,
wobei die Größe der Öffnung (32) nicht größer als 1/6 der Dicke (36) des perforierten Flächenkörpers (28) ist.

**7.** Anordnung nach einem der vorhergehenden Ansprüche,
wobei die Öffnung (32) eine runde Öffnung ist und die Öffnungsgröße ein Durchmesser ist.

**8.** Anordnung nach Anspruch 8,
wobei die Mehrzahl von Öffnungen (32) jeweils einen Durchmesser von etwa 0,004 Inch (0, 1016 mm) aufweisen.

**9.** Anordnung nach einem der vorhergehenden Ansprüche,
wobei die Oberfläche des perforierten Front-Flächenkörpers (28) eine äquivalente Sandkorn-Rauheit von nicht mehr als 0,0002 Inch (0,00508 mm) aufweist.

**10.** Anordnung nach einem der vorhergehenden Ansprüche,
wobei die Dicke (36) des perforierten Flächenkörpers (28) nicht größer als 0,10 Inch (2,54 mm) ist.

## Revendications

**1.** Ensemble formant revêtement d'atténuation acoustique (22) pour moteur d'avion comprenant : une structure cellulaire (26) pour dissiper l'énergie acoustique ; et
une première feuille de parement perforée (28) comprenant une pluralité d'ouvertures (32) ayant chacune une taille d'ouverture non supérieure à 0,005 pouce (0,127 mm),
**caractérisé en ce que** :

une surface de la première feuille de parement perforée (28) inclut une finition de surface non supérieure à une rugosité de grain de sable équivalente de 0,0003 pouce (0,00762 mm), dans laquelle la rugosité de grain de sable est déterminée selon la relation :

$K_s = d \times 0,45\sigma$ où $K_s$ est la rugosité de grain de sable équivalente en pouces, d est le diamètre de l'ouverture en pouces et $\sigma$ est le rapport de surface ouverte ; et
l'épaisseur de feuille de parement (36) est d'au moins 0,020 pouce (0,508 mm).

**2.** Ensemble selon la revendication 1, dans lequel une surface ouverte de la feuille de parement perforée (28) comprend une surface déterminée pour fournir un facteur de non-linéarité et un facteur de résistance souhaités sélectionnés.

**3.** Ensemble selon la revendication 1 ou 2, dans lequel chacune de la pluralité d'ouvertures (32) est espacée d'une distance égale.

**4.** Ensemble selon l'une quelconque des revendications précédentes, dans lequel la pluralité d'ouvertures (32) est disposée sensiblement transversalement à la surface de la feuille de parement (28) .

**5.** Ensemble selon l'une quelconque des revendications précédentes, dans lequel une surface ouverte de la feuille de parement perforée (28) est supérieure à 8,5 %.

**6.** Ensemble selon l'une quelconque des revendications précédentes, dans lequel la taille de l'ouverture (32) n'est pas supérieure à 1/16ème de l'épaisseur (36) de la feuille de parement perforée (28).

7. Ensemble selon l'une quelconque des revendications précédentes, dans lequel l'ouverture (32) est un trou rond et la taille d'ouverture est un diamètre.

8. Ensemble selon la revendication 8, dans lequel chacune de la pluralité d'ouvertures (32) inclut un diamètre d'environ 0,004 pouce (0,1016 mm),

9. Ensemble selon l'une quelconque des revendications précédentes, dans lequel la surface de la feuille de parement perforée (28) inclut une rugosité de grain de sable équivalente non supérieure à 0,0002 pouce (0,00508 mm) .

10. Ensemble selon l'une quelconque des revendications précédentes, dans lequel l'épaisseur (36) de la feuille perforée (28) n'est pas supérieure à 0,10 pouce (2,54 mm) .

**Fig-1**

**Fig-2**

**Fig-3**

**Fig-4**

**EP 2 489 856 B1**

**REFERENCES CITED IN THE DESCRIPTION**

**Patent documents cited in the description**

- US 5721402 A

**Non-patent literature cited in the description**

- **ROBERTS D W.** Equivalent sand-grain roughness of perforated plate acoustic linings. *AIAA Paper,* ISSN 0146-3705, 77-104